# EUROPEAN PATENT SPECIFICATION

(11) **EP 3 089 818 B1**
(45) Date of publication and mention of the grant of the patent: **23.05.2018**
(21) Application number: 14833605.0
(22) Date of filing: 30.12.2014
(51) Int. Cl.: B01J 35/00, B01J 21/06, B01J 31/04, B01J 31/02, B01J 23/42, B01J 37/02

(54) **A VISIBLE-LIGHT-ACTIVATED MULTILAYERED PHOTOCATALYST AND THE METHOD OF ITS PREPARATION**
IM SICHTBAREN LICHT AKTIVIERTER MEHRSCHICHTIGER PHOTOKATALYSATOR UND VERFAHREN ZU DESSEN HERSTELLUNG
PHOTOCATALYSEUR MULTICOUCHE ACTIVÉ PAR LA LUMIÈRE VISIBLE ET SON PROCÉDÉ DE PRÉPARATION

(30) Priority: 30.12.2013 PL 40670713
(43) Date of publication of application: 09.11.2016
(73) Proprietor: Uniwersytet Jagiellonski, 31-007 Krakow (PL)
(72) Inventor: MACYK, Wojciech, PL-32-060 Liszki (PL); BUCHALSKA, Marta, PL-30-392 Kraków (PL); TROCHOWSKI, Mateusz, PL-48-200 Prudnik (PL); ABUZ, Przemys aw, PL-31-636 Kraków (PL)
(74) Representative: Witek, Rafal
(86) International application number: PCT/PL2014/050081
(87) International publication number: WO 2015/102503

(56) References cited:
- US-A1- 2011 290 318
- US-A1- 2011 313 095
- US-A1- 2012 071 428
- US-A1- 2012 145 532
- MACYK W ET AL LEVASON BILL ET AL: "Titanium(IV) complexes as direct TiO2 photosensitizers", COORDINATION CHEMISTRY REVIEWS, ELSEVIER SCIENCE, AMSTERDAM, NL, vol. 254, no. 21-22, 1 November 2010 (2010-11-01), pages 2687-2701, XP027279934, ISSN: 0010-8545 [retrieved on 2010-01-07] cited in the application
- WOJCIECH MACYK ET AL: "Photoelectrochemical properties of platinum(iv) chloride surface modified TiO2", PHOTOCHEMICAL & PHOTOBIOLOGICAL SCIENCES, vol. 2, no. 3, 12 February 2003 (2003-02-12), pages 322-328, XP055198094, ISSN: 1474-905X, DOI: 10.1039/b211583b
- STEVEN M GEORGE: "Atomic layer Deposition: an overview", CHEMICAL REVIEWS, AMERICAN CHEMICAL SOCIETY, US, vol. 110, no. 1, 13 January 2010 (2010-01-13), pages 111-131, XP002680656, ISSN: 0009-2665, DOI: 10.1021/CR900056B [retrieved on 2009-11-30] cited in the application
- MOORTHI PICHUMANI ET AL: "Dynamics, crystallization and structures in colloid spin coating", SOFT MATTER, vol. 9, no. 12, 28 January 2013 (2013-01-28), page 3220, XP055198465, ISSN: 1744-683X, DOI: 10.1039/c3sm27455a cited in the application
- LUIS F HAKIM ET AL: "Synthesis of oxidation-resistant metal nanoparticles via atomic layer deposition", NANOTECHNOLOGY, IOP, BRISTOL, GB, vol. 18, no. 34, 29 August 2007 (2007-08-29), page 345603, XP020119498, ISSN: 0957-4484, DOI: 10.1088/0957-4484/18/34/345603
- L. F. HAKIM ET AL: "Nanoparticle Coating for Advanced Optical, Mechanical and Rheological Properties", ADVANCED FUNCTIONAL MATERIALS, vol. 17, no. 16, 31 August 2007 (2007-08-31), pages 3175-3181, XP055197876, ISSN: 1616-301X, DOI: 10.1002/adfm.200600877
- GUO H ET AL: "Noble metal-modified TiO2 thin film photocatalyst on porous steel fiber support", APPLIED CATALYSIS B: ENVIRONMENTAL, ELSEVIER, AMSTERDAM, NL, vol. 95, no. 3-4, 6 April 2010 (2010-04-06), pages 358-364, XP026964642, ISSN: 0926-3373 [retrieved on 2010-01-25]

## Description

### Discipline of technology

The subjects of this invention are active in visible light, photostable multilayered materials and the method of their preparation.

### State of the art

Scientific literature describes many pieces of information about photocatalytically active materials based on TiO₂. They may be used in a variety of science or engineering disciplines, e.g. as electrochrome material components (D. Di Yao et al., Nanoscale 2013, 5, 10353-10359), dielectrics and optic layers (V-S. Dang et al., Phys. Status Solidi A 2013, 1-9), solar cells sensitized to visible light (F. Chu et al., ACS Appl. Mater. Interfaces 2013, 5, 7170-7175), or lithium batteries (J. S. Chen, X. W. Lou, Materials Today 2012, 15, 246-254). TiO₂ layers can be the components of self-cleaning surfaces, anti-frost panes and antibacterial, self-sterilizing plates (Q. F. Xu et al., ACS Appl. Mater. Interfaces 2013, 5, 8915-8924). Materials based on TiO₂ might also be used in the processes of water and air cleaning (R. Daghrir et al., Ind. Eng. Chem. Res. 2013, 52 (10), 3581-3599).

The photocatalytic activity of titanium(IV) oxide occurs in the range of UV radiation. In order to increase its activity, e.g. in the range of visible light, it is necessary to photosensitize the material by appropriate organic and inorganic compounds or to introduce a mixture of transitional metal elements (Mn, Nb, V) or non-metal elements (N, S, P). It is known that as a result of titanium(IV) oxide modification with organic compounds containing hydroxyl or carboxylic group in the molecule, surface complex of Ti(IV)-modifier absorbing visible light can be obtained (W. Macyk et al., Coord. Chem. Rev. 2010, 254, 2687-2701). It is also known that such materials in the powder form (M.Buchalska et al., Dalton Trans. 2013, 42, 9468-9475) or coatings (patent claim P 400098, PCT/EP2013/065400) can present photocatalytic activity during irradiation by UV, UV-vis or visible light. A well-known method of applying thin layers of material on different type surfaces is ALD (Atomic Layer Deposition).
The layer thickness depends reproducibly on the deposition parameters (inter alia on the number of cycles used) (Steven M. George, Chem. Rev. 2010, 110, 111-131). The "spin-coating" technique is a well-known method of applying thin layers of materials on flat surfaces, described in M. Pichumani et al., SoftMatter 2013, 9, 3220-3229. The observed drawback of this technique is difficulty in obtaining durable and stable photocatalytic coatings of titanium(IV) oxide active in visible light.
For example, these defects are observed in materials described in patent application P 397593. Therefore, there is still a need for a preparation method that allows to obtain stable coatings based on modified TiO₂ photosensitized to visible light.
This problem was unexpectedly solved by providing a layered photocatalysts according to claim 9, prepared as defined in claim 1.

### Detailed description of the invention

The subjects of this invention are photocatalytic materials based on titanium(IV) oxide activated with visible light, characterized in that:
a) the base consists of a surface-modified titanium(IV) oxide, preferably microcrystalline or nanocrystalline, in the form of powder or coating, the modifier being an aromatic organic compound which contains at least two -OH or -COOH groups or hexachloroplatinate(IV) ion;
b) the modified material being additionally covered with a thin protective layer of titanium(IV) oxide deposited by ALD technique (for materials in the form of powders or coatings) or "spin-coating" technique (for materials in the form of coatings).

Preferably, nanocrystalline titanium(IV) oxide is surface-modified by a compound selected from the group, which contains:
a) an organic compound of formula 1 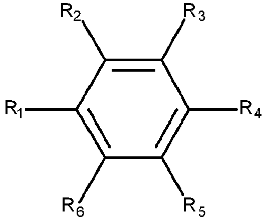 where: R₁-R₄ denotes -H or saturated or unsaturated substituents, NH₂, -NH₃⁺ or -SO₃M in which M denotes H⁺, K⁺, Na⁺, Li⁺, NH₄⁺, and R₅ and R₆ denote -OH or -COOH,
b) ascorbic acid,
c) 2,5-dihydroxyterephthalic acid,
d) hexachloroplatinic acid,
e) hematoxylin of formula: 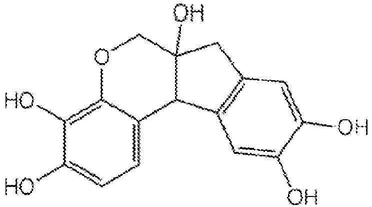
f) bromopyrogallol red of formula:

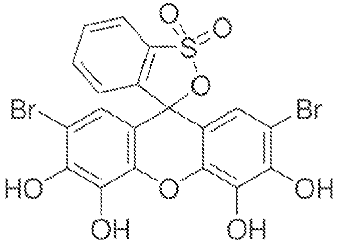

Particularly preferably, the organic compound is a compound selected from the group consisting of phthalic acid, 4-sulphophthalic acid, 4-amino-2-hydroxybenzoic acid, 3-hydroxy-2-naphthylic acid, salicylic acid, 6-hydroxysalicylic acid, 5-hydroxysalicylic acid, 5-sulphosalicylic acid, 3,5-dinitrosalicylic acid, disodium salt of 1,4-dihydroxy-1,3-benzenedisulphonic acid, gallic acid, pyrogallol, 2,3-naphthalenediol, 4-methylcatechol,3,5-di-tert-butylcatechol,p-nitrocatechol, 3,4-dihydroxy-L-phenyloalanine(DOPA), catechol, 2,5-dihydroxyterephthalic acid, rutin, ascorbic acid. Also preferably a surface modifier is hexachloroplatinic acid or a salt of this acid

The invention also relates to the preparation method of multilayered photocatalytic materials made of titanium(IV) oxide activated with visible light, characterized in that it comprises two steps:
a) surface modification of titanium(IV) oxide (powder or coating) by covering it with a modifier as set out above in the form of a solution,
b) depositing the protective layer of titanium(IV) oxide on the modified material by the ALD technique (on the material in a powder or coating form) or the "spin-coating" technique (on the material in a form of coating),

Preferably, for the synthesis crystalline titanium(IV) oxide is used, characterized by anatase structure or being a mixture of anatase and rutile.

Preferably, surface modification of the material is carried out in water or alcohol solution of the modifier of minimal concentration 10⁻⁴ mol/dm³ and then followed by drying.

Preferably, the organic compound is one of the following: phthalic acid, 4-sulphophthalic acid, 4-amino-2-hydroxybenzoic acid, 3-hydroxy-2-naphthoic acid, salicylic acid, 6-hydroxysalicylic acid, 5-hydroxysalicylic acid, 5-sulphosalicylic acid, 3,5-dinitrosalicylic acid, 2,5-dihydroxyterephthalic acid, aurintricarboxilic acid (Table 1), disodium salt of 1,4-dihydroxy-1,3-benzenedisulphonic acid, gallic acid, pyrogallol, 2,3-naphtalenediol, 4-methylcatechol, 3,5-di-tert-butylcatechol, p-nitrocatechol, 3,4-dihydroxy-L-phenylalanine (DOPA), catechol (table 2), rutin, ascorbic acid. Also preferably, the surface modifier is hexachloroplatinic acid or the salt of this acid. Also preferably, deposition of the protective layer is carried out by the ALD technique. Preferably, titanium(IV) alcoholates e.g. (isopropylate) are used as the precursors for the synthesis of the protective layer.

Preferably the temperature of deposition of the material with the protective layer is not higher than 150°C.

Preferably, when mean thickness *d* of the external TiO₂ layer is in the range of 1-20 nm.

**Table 1. Phthalic acid and derivatives of salicylic acid.**

| Compound symbol | Compound name | Structural formula |
|---|---|---|
| A-1 | phthalic acid | 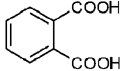 |
| A-2 | 4-sulphophthalic acid | 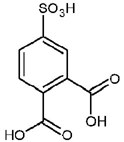 |
| S-1 | 4-amino-2-hydroxybenzoic acid | 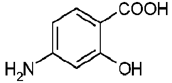 |
| S-2 | 3-hydroxy-2-naphthoic acid | 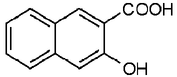 |
| S-3 | salicylic acid | 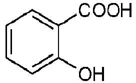 |
| S-4 | 6-hydroxysalicylic acid | 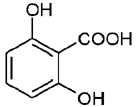 |
| S-5 | 5-hydroxysalicylic acid | 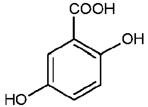 |
| S-6 | 5-sulphosalicylic acid | 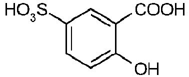 |
| S-7 | 3,5-dinitrosalicylic acid | 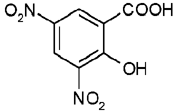 |
| S-8 | 2,5-dihydroxyterephthalic acid | 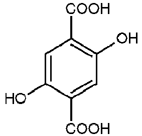 |
| S-9 | aurintricarboxilic acid | 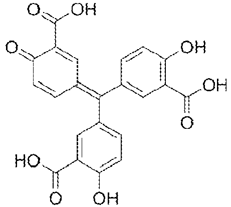 |

**Table 2. Catechol derivatives.**

| Compound symbol | Compound name | Structural formula |
|---|---|---|
| K-1 | Disodium salt of 1,4-dihydroxy-1,3-benzenedisulphonic acid | 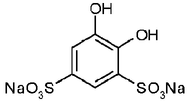 |
| K-2 | gallic acid | 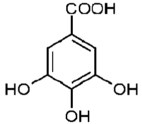 |
| K-3 | pyrogallol | 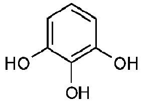 |
| K-4 | 2,3-naphthalenediol | 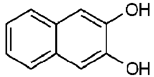 |
| K-5 | 4-methylcatechol | 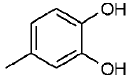 |
| K-6 | 3,5-di-tert-butylcatechol | 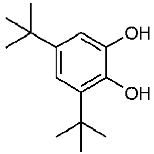 |
| K-7 | *p*-nitrocatechol | 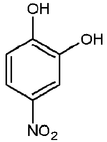 |
| K-8 | 3,4-dihydroxy-*l*-phenylalanine (DOPA) | 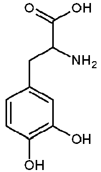 |
| K-9 | 1,2-dihydroxy benzene (catechol) | 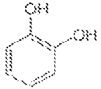 |

The material according to the invention exhibits photocatalytic activity upon irradiation with visible light (*λ* > 400 nm; photocatalysis is the result of the absorption of visible light by the resulting titanium surface complex of the *charge-transfer* type) as well as ultraviolet light (*λ* < 400 nm; photocatalysis is the result of the absorption of ultraviolet light by the resulting surface complex of the *charge-transfer* type or directly by titanium dioxide).

The irradiation generates so-called reactive oxygen species (OH^{•}, O₂⁻, H₂O₂, ¹O₂) responsible for the oxidation of organic compounds. The additional layer of TiO₂ applied on the surface of the material protects the titanium surface complex against negative influence of reactive oxygen species. The application of the protective layer should not cause significantly reduced photocatalytic activity of the material, but significantly enhance its durability.

In order to aid understanding the essence of the invention as defined above, below examples are given and figures are attached.
Figure 1 presents the structure of photocatalytic materials of TiO₂ modified with surface protective layer.
Figure 2 presents decrease in absorbance at λ = 400 nm (absorption band of TiO₂ surface complex with organic modifier) during irradiation (XBO-150, λ > 435 nm) of materials in the powder form with or without TiO₂ protective layer. A) K-9@P25, B) K-4@P25. Test details are described in example 4.
Figure 3 presents increase in hydroxyterephthalic acid concentration during irradiation of terephthalic acid solution in the presence of materials in the powder form with or without the external protective layer A) K-9@N100, B) K-4@N100, C) K-9@P25, D) K-4@P25.

Test details are described in example 5.

Figure 4 presents changes in 4-chlorophenol concentration during irradiation in the presence of material in the powder form with or without the external protective layer. Test details are described in example 5.

### Example 1. Preparation of a powder form visible-light-activated photocatalyst with protective layer deposited using the ALD technique.

The starting substrates for the synthesis of materials are:
- not modified titanium(IV) oxide commercially available
- organic surface modifiers
- titanium isopropylate, deionized water
0,2 g of commercially available TiO₂ material was weighted (Evonik P25 or Hombikat N100). Than 1 ml of organic modifier solution from the group S (S-2, S-3, Table1) or the group K (K-4, K-9, Table 2) prepared in 1mmol/dm³ concentration of methanol was added into titanium(IV) oxide..

The substances were thoroughly stirred and then left to sediment for 24h. After this time the supernatant liquid was collected from sediment and the sediment was flushed with water three times. Materials collected in the form of powders were air-dried. After drying, the powders were grinded using a mortar.

Every such prepared material was put into a crystallizer, which then was put into the reaction chamber of the ALD reactor (Picosun R-150).

The synthesis of the protective layer was performed using titanium(IV) isopropylate and deionized water as precursors. The precursors were administered in impulses every 0.2 second, sparging the system with nitrogen after each impulse for 3 seconds. The synthesis was finished after 300 cycles. The synthesis was carried out in the temperature of 150°C. The ready materials were air-dried.

### Example 2. Preparation of a coating form visible-light-activated photocatalyst on glass plate with protective layer deposited using the ALD technique.

The starting substrates for the synthesis of materials are:
- glass plates (basic microscope slides)
- not-modified nanocrystalline titanium(IV) oxide (anatase structure) in the form of colloidal water solution of particles smaller than 100 nm and surface modifiers.

The synthesis of coating on glass plates was carried out using the spin-coating technique from 5% w/w colloidal solution of titanium(IV) oxide. Application on a plate was performed at the speed of rotation of the plate of 8000 cycles/min. The plate was rotated for 30 seconds and, meanwhile, three times 200 ml of the colloidal solution were put into the reactor.

The plate was left to dry and then it was immersed in the solution of organic modifier of the S group (S-2,S-3, Table 1) or the K group (K-4,K-9, Table 2) prepared in the 1 mmol/dm³ concentration of methanol for 10 seconds. The plates were air-dried. Such prepared plates were put into the reaction chamber of the ALD (Picosun R-150) reactor. The synthesis of the protective layer was performed using titanium(IV) isopropylate and deionized water as precursors. The precursors were administered in impulses of 0.2 seconds, sparging the system with nitrogen after each impulse. The synthesis was finished after 300 such cycles. The synthesis was carried out in the temperature of 150°C. The ready materials were air-dried.

### Example 3. Preparation of a coating form of visible-light-activated photocatalyst on glass plate with the protective layer deposited using the "spin-coating" technique.

The starting substrates for the synthesis of materials are:
- glass plates (basic microscope slides)
- not-modified nanocrystalline titanium(IV) oxide (anatase structure), in the form of colloidal water solution of particles smaller than 100 nm and surface modifiers.

The synthesis of coating on glass plates was carried out using the spin-coating technique from 5% w/w colloidal solution of titanium(IV) oxide. Application on a plate was performed at the plate rotation speed of 8000 cycles/min. The plate was rotated for 30 seconds and, meanwhile, three times 200 ml of the colloidal solution were put into the reactor. The plate was left to dry and then it was immersed in the solution of organic modifier of the S group (S-2,S-3, Table 1) or the K group (K-4,K-9, Table 2) or the solution of hexachloroplatinic acid prepared in the 1 mmol/dm3 concentration of methanol for approx. 10 seconds. After drying, another layer of TiO₂ was applied in an analogous manner, resulting in a modified TiO₂ layer with a protective coating.

### Example 4. Photostability tests of powder form of materials with protective layer.

Measurements of the photostability of powder materials modified by organic compounds from the K group (K-4, K-9, Table 2) with an additional protective layer deposited using the ALD technique were performed. An analogous test was performed for the same materials without the protective layer.

20 mg of the tested material was added into 2 g of analytically pure BaS04 . The substances were thoroughly mixed and the resulting mixture was formed into a tablet.

Such a prepared tablet was put into a special holder designed for the analysis of diffuse-reflectance spectra and then irradiated for 30 min, recording diffuse-reflectance spectra of the sample every 5 min. Irradiation system consisted of a xenon illuminator XBO-150, a water filter with solution of copper(II) sulfate (cutting off radiation from the near infrared, λ > 700nm) and an upper flow filter tolerant for the irradiation in the range of λ > 435 nm.

The sample was placed in the distance of 40 cm from the light source.

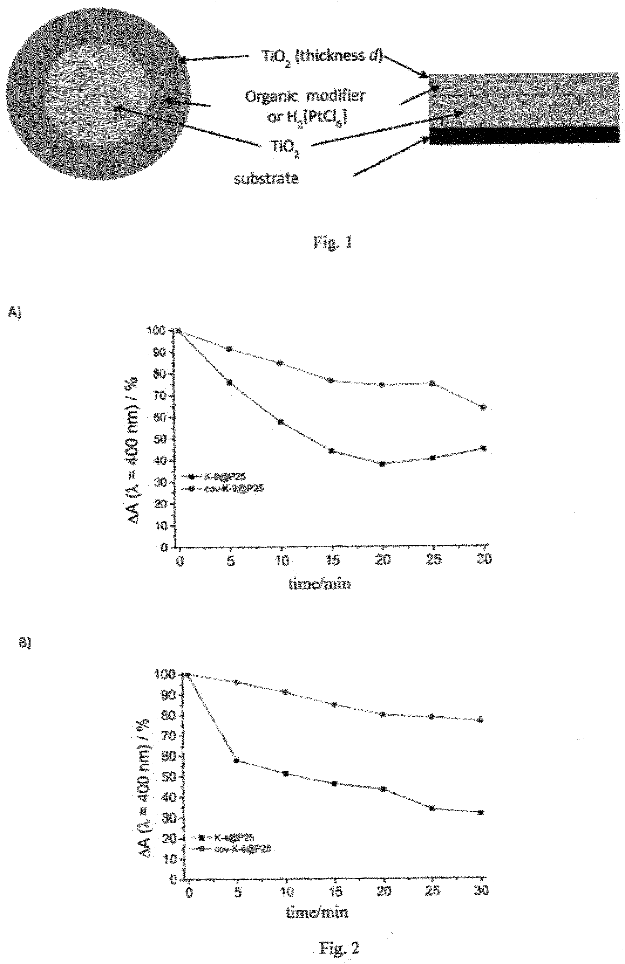

Figure 2 presents changes in absorbance at λ = 400 nm (absorption band of TiO₂ surface complex with organic modifier) for samples of modified TiO₂ with the protective layer and an analogous sample without it.

Samples protected with an additional TiO₂ coating are characterized by a better photostability (lower degradation of the sensibilizer) than the analogous samples without it.

Results obtained are summarized in Figure 2.

### Example 5. Photocatalytic activity tests of powder materials with protective coating.

### Variant 1. Photooxidation of terephthalic acid.

Measurements of the photocatalytic activity of powder materials modified by organic compounds from the K group (K-4, K-9, Table 2) with an additional protective layer deposited using the ALD technique were performed. An analogous test was performed for the same materials without the protective layer.

Suspension of the material was prepared (1 g/dm³) in water solution of terephthalic acid (C = 3×10⁻³ mol dm⁻³ TA, 0.02 mol dm⁻³ NaOH).The suspension was put into a cylindrical cuvette of 5 cm diameter, capacity of 18 ml and with 1 cm optical path length. Such a prepared suspension was irradiated for 30 min (irradiation conditions as in example 4) collecting 1.5 ml of the sample every 5 minutes. The samples were filtered using a CME syringe filter with pores of 0.22 m in diameter. Hydroxyterephthalic acid results in the reaction of terephthalic acid with photogenerated hydroxyl radicals. The hydroxyterephthalic exhibits good emission properties.

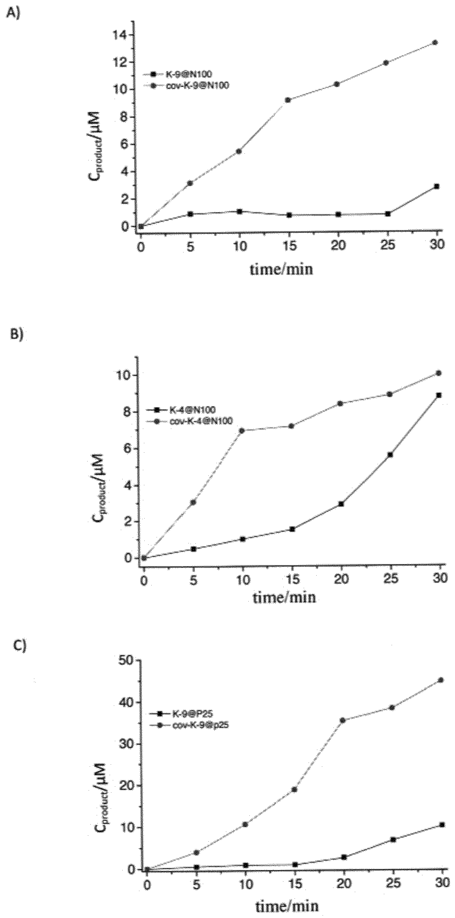

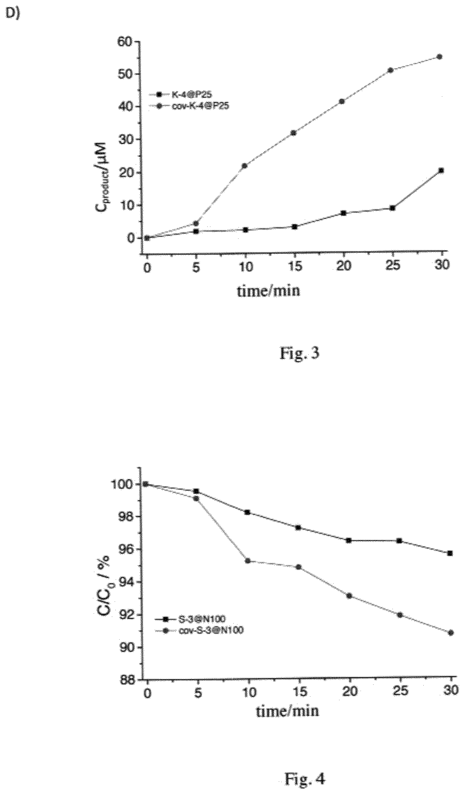

The progress of reaction (increase in the product concentration) was monitored by recording the emission spectra of the collected solutions in the range of 320-600 nm (λ_{exc} = 315 nm). Results were summarized in Figure 3. Materials with the protective layer consisting TiO₂ are characterized by a higher activity than materials without it.

### Variant 2.

### Photodegradation of 4-chlorophenol.

Measurements were taken to assess the photoactivity of powder material modified by an organic compound from the S group (S-3, Table 1) and containing an additional protective layer deposited by the ALD technique.

An analogous test was performed for the same material without a protective layer.

Suspension of the material (1g/dm³) in water solution of 4-chlorophenol (C=2.5×10⁻⁴ mol/dm³) was prepared. The suspension was put into a cylindrical cuvette, 5 cm in diameter, capacity of 18 ml and with 1 cm optical path length.

Such a prepared suspension was irradiated for 30 minutes (irradiation conditions as in example 4), collecting 1.5 ml of the sample every 5 minutes. The samples were filtered using a CME syringe filter with pores of 0.22 m in diameter. The reaction progress was monitored with the use of a spectrophotometer by registering the disappearance of absorbance at a wavelength of λ = 280 nm.

Results are summarized in Figure 4. Materials with the protective layer consisting TiO₂ are characterized by a higher activity than materials without it.

## Claims

1. Preparation method of a visible-light-activated multilayered photocatalyst **characterized in that**:
a) the surface of titanium(IV) oxide in the form of powder or coating is modified by impregnation with a modifier solution, where the modifier is an aromatic organic compound with at least two -OH or -COOH groups or a hexachloroplatinate(IV) ion,
b) the protective layer of titanium(IV) oxide is applied on the modified material, where the known ALD or "spin-coating" techniques are used.

2. Method according to claim 1, **characterized in that** it uses crystalline titanium(IV) oxide with a structure of anatase or being a mixture of anatase and rutile structure.

3. Method according to claim 1, **characterized in that** stage a) is carried out in water or alcohol solution of the modifier of the 10⁻⁴ mol/dm³ minimal concentration and the product of the modification is dried.

4. Method according to claim 1, **characterized in that** the organic compound is an organic compound from the group encompassing a compound with formula I: 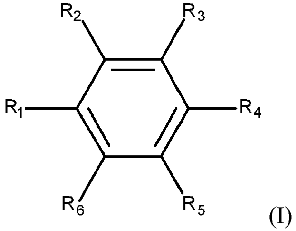 where: R₁-R₄ denotes -H, saturated or unsaturated substituents, -NH₂, -NH₃⁺ or - SO₃M, in which M denotes H⁺, K⁺, Na⁺, Li⁺, NH₄⁺, and R₅ and R₆ denotes -OH or - COOH, ascorbic acid, 2,5-dihydroxyterephthalic acid, hexachloroplatinic acid, hematoxylin and bromopyrogallol red.

5. Method according to claim 1, **characterized in that** the organic compound is selected from the group consisting of: phthalic acid, 4-sulfophthalic acid, 4-amino-2-hydroxybenzoic acid, 3-hydroxy-2-naphthoic acid, salicylic acid, 6-hydroxysalicylic acid, 5-hydroxysalicylic acid, 5-sulfosalicylic acid, 3,5-dinitrosalicylic acid, 2,5-dihydroxyterephthalic acid, aurintricarboxylic acid, disodium salt of 1,4-dihydroxy-1,3-benzenodisulfonic acid, gallic acid, pyrogallol, 2,3-naphthalenediol, 4-methylcatechol,3-5-di-tert-butyl-catechol, p-nitrocatechol, 3,4-dihydroxy-1-phenylalanine (DOPA), catechol (Table 2), rutin and ascorbic acid.

6. Method according to claim 1, **characterized in that** stage b) uses alcoholates, preferably titanium(IV) isopropylate, as precursors for the synthesis of the protective layer.

7. Method according to claim 1, **characterized in that** application temperature of the layers is not higher than 150°C.

8. Method according to claim 1, **characterized in that** the mean thickness *d* of the external TiO₂ layer is within the range of 1-20 nm.

9. Photocatalyst **characterized in that** it contains two, in principle parallel surfaces consisting of titanium(IV) oxide and an appropriate binding layer between them consisting of an aromatic organic compound with minimum two -OH or -COOH groups or hexachloroplatinate(IV) ion, where, preferably, the organic compound is one of the group encompassing a compound with formula I: 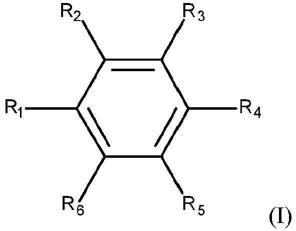 where: R₁-R₄ denotes -H, saturated or unsaturated substituents, -NH₂, -NH₃⁺ or -SO₃M, in which M denotes H⁺, K⁺, Na⁺, Li⁺, NH₄⁺, and R₅ and R₆ denote -OH or -COOH, ascorbic acid, 2,5-dihydroxyterephthalic acid, chloroplatinic acid, hematoxilin and bromopyrogallol red.

10. Photocatalyst according to claim 9, **characterized in that** the organic compound is selected from the group encompassing: phthalic acid, 4-sulfophthalic acid, 4-amino-2-hydroxybenzoic acid, 3-hydroxy-2-naphthyl acid, salicylic acid, 6-hydroxysalicylic acid, 5-hydroxysalicylic acid, 5-sulfosalicylic acid, 3,5-dinitrosalicylic acid, disodium salt of 1,4-dihydroxy-1,3-benzenodisulfonic acid, gallic acid, pyrogallol, 2,3-naphthalenediol, 4-methylcatechol, 3-5-di-tert-butyl-catechol, p-nitrocatechol, 3,4-dihydroxy-1-phenylalanine (DOPA), catechol, 2,5-dihydroxyterephthalic acid, rutin, and ascorbic acid.

11. Photocatalyst according to claim 9, **characterized in that** it was prepared by the method according to claims 1-8.

## Patentansprüche

1. Herstellungsverfahren für einen durch sichtbares Licht aktivierten Multilagen-Photokatalysator, **dadurch gekennzeichnet, dass**
a) die Oberfläche von Titan(IV)oxid in Form eines Pulvers oder einer Beschichtung durch Imprägnierung mit einer Lösung eines Modifizierers modifiziert wird, wobei der Modifizierer eine aromatische organische Verbindung ist, mit mindestens zwei -OH oder -COOH Gruppen oder einem Hexachloroplatinat(IV)ion,
b) die Schutzlage von Titan(IV)oxid auf dem modifizierten Material aufgetragen wird, wobei die bekannten ALD- oder "Spin-Coating"-Techniken verwendet werden.

2. Verfahren nach Anspruch 1, **dadurch gekennzeichnet, dass** es kristallines Titan(IV)oxid verwendet, mit einer Anatas-Struktur oder als ein Gemisch von Aanatas- und Rutil-Struktur.

3. Verfahren nach Anspruch 1, **dadurch gekennzeichnet, dass** Phase a) in Wasser oder alkoholischer Lösung des Modifizierers einer 10⁻⁴ mol/dm³ Minimalkonzentration durchgeführt wird, und das Produkt der Modifikation getrocknet wird.

4. Verfahren nach Anspruch 1, **dadurch gekennzeichnet, dass** die organische Verbindung eine organische Verbindung aus der Gruppe umfassend eine Verbindung mit Formel I ist 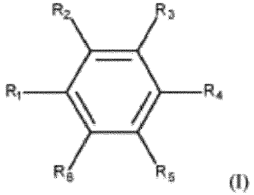 worin: R₁-R₄ -H, gesättigte oder ungesättigte Substituenten, -NH₂, -NH₃⁺ oder - SO₃M bezeichnet, worin M H⁺, K⁺, Na⁺, Li⁺, NH4⁺ bezeichnet, und R₅ und R₆ -OH oder - COOH, Ascorbinsäure, 2,5-Dihydroxyterephthalsäure, Hexachloroplatinsäure, Hämatoxylin und Brompyrogallolrot bezeichnet.

5. Verfahren nach Anspruch 1, **dadurch gekennzeichnet, dass** die organische Verbindung ausgewählt ist aus der Gruppe bestehend aus Phthalsäure, 4-Sulfophthalsäure, 4-Amino-2-hydroxybenzoesäure, 3-Hydroxy-2-naphthoesäure, Salicylsäure, 6-Hydroxysalicylsäure, 5-Hydroxysalicylsäure, 5-Sulfosalicylsäure, 3,5-Dinitrosalicylsäure, 2,5-Dihydroxyterephthalsäure, Aurintricarboxylsäure, Dinatriumsalz von 1,4-Dihydroxy-1,3-benzoldisulfonsäure, Gallsäure, Pyrogallol, 2,3-Naphthalendiol, 4-Methylcatechol, 3-5-Di-tert-butylcatechol, P-Nitrocatechol, 3,4-Dihydroxy-1-phenylalanin (DOPA), Catechol (Tabelle 2), Rutin und Ascorbinsäure.

6. Verfahren nach Anspruch 1, **dadurch gekennzeichnet, dass** Phase b) Alkoholate, bevorzugt Titan(IV)isopropylat, als Vorläufer für die Synthese der Schutzlage verwendet.

7. Verfahren nach Anspruch 1, **dadurch gekennzeichnet, dass** die Aufbringungstemperatur der Lagen nicht höher als 150°C ist.

8. Verfahren nach Anspruch 1, **dadurch gekennzeichnet, dass** die mittlere Dicke *d* der externen TiO₂-Lage innerhalb des Bereichs von 1-20 nm liegt.

9. Photokatalysator, **dadurch gekennzeichnet, dass** er zwei im Prinzip parallele Oberflächen enthält, die aus Titan(IV)oxid bestehen und einer geeigneten Bindelage zwischen den beiden, bestehend aus einer aromatischen organischen Verbindung mit mindestens zwei - OH oder -COOH Gruppen oder einem Hexachloroplatinat(IV)ion, wobei bevorzugt die organische Verbindung eine organische Verbindung aus der Gruppe umfassend eine Verbindung mit Formel I ist 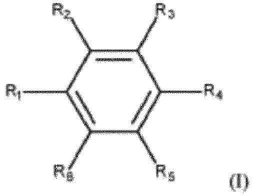 worin: R₁-R₄ -H, gesättigte oder ungesättigte Substituenten, -NH₂, -NH₃⁺ oder - SO₃M bezeichnet, worin M H⁺, K⁺, Na⁺, Li⁺, NH4⁺ bezeichnet, und R₅ und R₆ -OH oder - COOH, Ascorbinsäure, 2,5-Dihydroxyterephthalsäure, Hexachloroplatinsäure, Hämatoxylin und Brompyrogallolrot bezeichnet.

10. Photokatalysator nach Anspruch 9, **dadurch gekennzeichnet, dass** die organische Verbindung ausgewählt ist aus der Gruppe umfassend Phthalsäure, 4-Sulfophthalsäure, 4-Amino-2-hydroxybenzoesäure, 3-Hydroxy-2-naphthoesäure, Salicylsäure, 6-Hydroxysalicylsäure, 5-Hydroxysalicylsäure, 5-Sulfosalicylsäure, 3,5-Dinitrosalicylsäure, Dinatriumsalz von 1,4-Dihydroxy-1,3-benzoldisulfonsäure, Gallsäure, Pyrogallol, 2,3-Naphthalendiol, 4-Methylcatechol, 3-5-Di-tert-butylcatechol, P-Nitrocatechol, 3,4-Dihydroxy-1-phenylalanin (DOPA), Catechol, 2,5-Dihydroxyterephthalsäure, Rutin und Ascorbinsäure.

11. Photokatalysator nach Anspruch 9, **dadurch gekennzeichnet, dass** er durch ein Verfahren nach einem der Ansprüche 1-8 hergestellt wurde.

## Revendications

1. Méthode de préparation d'un photocatalyseur multicouche activé par la lumière visible **caractérisée en ce que** :
a) la surface d'oxyde de titane (IV) sous la forme d'une poudre ou d'un revêtement est modifiée par imprégnation avec une solution de modificateur, où le modificateur est un composé organique aromatique ayant au moins deux groupes -OH ou -COOH ou un ion hexa-chloroplatinate (IV),
b) la couche protectrice d'oxyde de titane (IV) est appliquée sur le matériau modifié, où les techniques ALD ou « de revêtement par centrifugation » connues sont utilisées.

2. Méthode selon la revendication 1, **caractérisée en ce qu'**elle utilise un oxyde de titane (IV) cristallin ayant une structure d'anatase ou étant un mélange de structure d'anatase et de rutile.

3. Méthode selon la revendication 1, **caractérisée en ce que** l'étape a) est réalisée dans une solution aqueuse ou alcoolique du modificateur à la concentration minimale de 10⁻⁴ mole/dm³ et le produit de la modification est séché.

4. Méthode selon la revendication 1, **caractérisée en ce que** le composé organique est un composé organique du groupe englobant un composé de formule I : 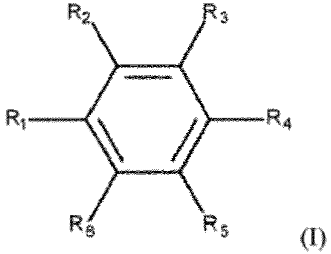 où : R₁ à R₄ indiquent -H, des substituants saturés ou insaturés, -NH₂, -NH₃⁺ ou -SO₃M, dans lequel M indique H⁺, K⁺, Na⁺, Li⁺, NH₄⁺, et R₅ et R₆ indiquent -OH ou -COOH, l'acide ascorbique, l'acide 2,5-di-hydroxytéréphtalique, l'acide hexachloroplatinique, l'hématoxyline et le rouge de bromopyrogallol.

5. Méthode selon la revendication 1, **caractérisée en ce que** le composé organique est sélectionné dans le groupe consistant en : l'acide phtalique, l'acide 4-sulfo-phtalique, l'acide 4-amino-2-hydroxybenzoïque, l'acide 3-hydroxy-2-naphtoïque, l'acide salicylique, l'acide 6-hydroxysalicylique, l'acide 5-hydroxysalicylique, l'acide 5-sulfosalicylique, l'acide 3,5-dinitro-salicylique, l'acide 2,5-dihydroxytéréphtalique, l'acide aurintricarboxylique, le sel de disodium de l'acide 1,4-dihydroxy-1,3-benzènodisulfonique, l'acide gallique, le pyrogallol, le 2,3-naphtalènediol, le 4-méthylcatéchol, le 3,5-di-tert-butyl-catéchol, le p-nitrocatéchol, la 3,4-dihydroxy-1-phénylalanine (DOPA), le catéchol (tableau 2), la rutine et l'acide ascorbique.

6. Méthode selon la revendication 1, **caractérisée en ce que** l'étape b) utilise des alcoolates, de préférence l'isopropylate de titane (IV), comme précurseurs pour la synthèse de la couche protectrice.

7. Méthode selon la revendication 1, **caractérisée en ce que** la température d'application des couches n'est pas supérieure à 150 °C.

8. Méthode selon la revendication 1, **caractérisée en ce que** l'épaisseur moyenne *d* de la couche externe de TiO₂ est dans la plage allant de 1 à 20 nm.

9. Photocatalyseur **caractérisé en ce qu'**il contient deux surfaces en principe parallèles consistant en oxyde de titane (IV) et une couche de liaison appropriée entre elles consistant en un composé organique aromatique ayant au minimum deux groupes -OH ou -COOH ou un ion hexachloroplatinate (IV), où, de préférence, le composé organique est un du groupe englobant un composé de formule I : 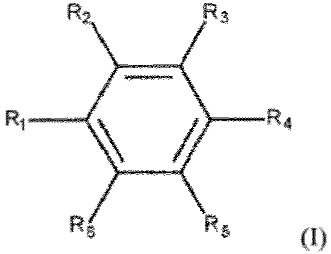 où : R₁ à R₄ indiquent -H, des substituants saturés ou insaturés, -NH₂, -NH₃⁺ ou -SO₃M, dans lequel M indique H⁺, K⁺, Na⁺, Li⁺, NH₄⁺, et R₅ et R₆ indiquent -OH ou -COOH, l'acide ascorbique, l'acide 2,5-dihydroxy-téréphtalique, l'acide chloroplatinique, l'hématoxyline et le rouge de bromopyrogallol.

10. Photocatalyseur selon la revendication 9, **caractérisé en ce que** le composé organique est sélectionné dans le groupe englobant : l'acide phtalique, l'acide 4-sulfophtalique, l'acide 4-amino-2-hydroxybenzoïque, l'acide 3-hydroxy-2-naphtylique, l'acide salicylique, l'acide 6-hydroxysalicylique, l'acide 5-hydroxysalicylique, l'acide 5-sulfo-salicylique, l'acide 3,5-dinitrosalicylique, le sel de disodium de l'acide 1,4-dihydroxy-1,3-benzèno-disulfonique, l'acide gallique, le pyrogallol, le 2,3-naphtalènediol, le 4-méthylcatéchol, le 3,5-di-tert-butyl-catéchol, le p-nitrocatéchol, la 3,4-di-hydroxy-1-phénylalanine (DOPA), le catéchol, l'acide 2,5-dihydroxytéréphtalique, la rutine et l'acide ascorbique.

11. Photocatalyseur selon la revendication 9, **caractérisé en ce qu'**il a été préparé par la méthode selon les revendications 1 à 8.
